# EUROPEAN PATENT SPECIFICATION

(11) **EP 1 438 358 B1**
(45) Date of publication and mention of the grant of the patent: **07.03.2012**
(21) Application number: 02775071.0
(22) Date of filing: 14.10.2002
(51) Int. Cl.: C09B 67/22, D06P 1/38, D06P 3/66

(54) **TRICHROMATIC DYEING PROCESS AND DYE MIXTURES USED THEREIN**
TRICHROMIEFÄRBEVERFAHREN SOWIE DAFÜR VERWENDETE FARBSTOFFMISCHUNGEN
PROCEDE DE TEINTURE TRICHROMATIQUE ET MELANGES DE TEINTURES UTILISES AVEC CE PROCEDE

(30) Priority: 17.10.2001 GB 0124842
(43) Date of publication of application: 21.07.2004
(73) Proprietor: Clariant Finance (BVI) Limited, Road Town, Tortola (VG)
(72) Inventor: GISLER, Markus, CH-4310 Rheinfelden (CH); WALD, Roland, F-68330 Huningue (FR)
(74) Representative: Hütter, Klaus
(86) International application number: PCT/IB2002/004216
(87) International publication number: WO 2003/033600

(56) References cited:
- EP-A- 0 226 982
- EP-A- 0 877 116
- EP-A- 0 969 051
- DATABASE WPI Section Ch, Week 200172 Derwent Publications Ltd., London, GB; Class A60, AN 2001-620173 XP002227581 -& JP 2001 200174 A (SUMITOMO CHEM CO LTD) , 24 July 2001 (2001-07-24)

## Description

The present invention relates to a process for the trichromatic dyeing or printing hydroxy-group-containing or nitrogen-containing organic substrates with dye mixtures and also to such dye mixtures and hydroxy-group-containing or nitrogen-containing organic substrates dyed or printed therewith.

Trichromatic describes the additive colour mixing of suitable yellow- or orange-, red- and blue-dyeing dyes with which any desired shade in the visible spectrum can be obtained by suitably selecting the amount ratios for the dyes.

Trichromatic dyeing is well known from the literature for various dye classes, for example from EP 83299, DE 2623178, EP 226982 and EP808940. Moreover trichromatic dyeing or dyes used in this application are also known from JP2001-200174. EP735112, EP486176 and WO02051944.

Optimum trichromatic performance of any yellow (or orange), red and blue dye mixture is crucially dependent on the neutral affinity and migration characteristics. Dyes having identical or very similar characteristics with regard to neutral affinity and migration are highly compatible with regard to trichromatic performance.

It is an object of the present invention to provide a trichromatic dyeing process and associated trichromatic dye mixtures consisting of at least one red component, at least one yellow (or orange) component and at least one blue component whereby trichromatic dyeing with good fastnesses is obtained.

This object is achieved by a trichromatic dyeing process which is characterized by using a dye mixture comprising at least one red-dyeing compound of the formula (I) 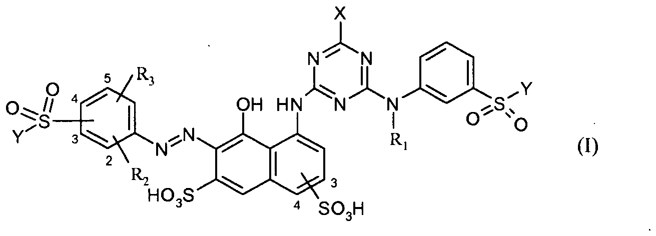 wherein
- R₁: is a C₁₋₄-alkyl group or a substituted C₂₋₄-alkyl group,
- R₂ and R₃: are independently from each other H; -OH; -CN; C₁₋₂-alkyl; -SO₃H; -COOH; -OC₁₋₂-alkyl or -NH₂,
- X: is a halogen radical and
- Y: signifies -CH=CH₂ or -CH₂CH₂-Z, wherein Z is a radical which can be eliminated by alkali,
and at least one yellow (or orange)-dyeing compound;
and at least one blue-dyeing compound,
wherein the at least one yellow (or orange)-dyeing compound is at least one yellow (or orange)-dyeing compound of the formula (II) 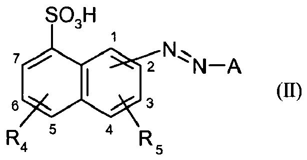 wherein
- R₄ and R₅: signify independently from each other H or -SO₃H,
- A: signifies a group of formula (i) or (ia) 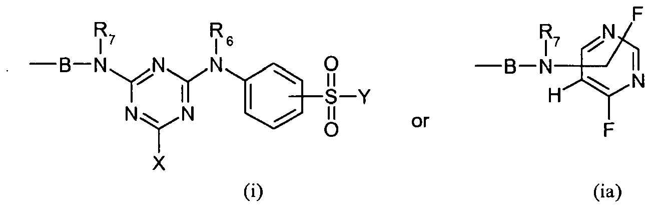
wherein
- X and Y: have the same meanings as defined above,
- R₆ and R₇: signify independently from each other H; unsubstituted C₁₋₄alkyl or substituted C₁₋₄alkyl,
- B: signifies 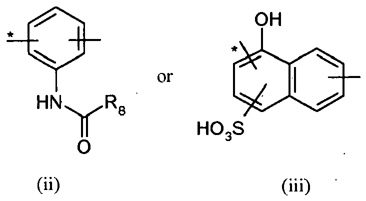
wherein R₈ signifies C₁₋₄alkyl; -NH₂ or -NHC₁₋₄alkyl,
and the asterisk marks the bond to the -N=N- group;
and/or at least one yellow (or orange)-dyeing compounds of formula (III) 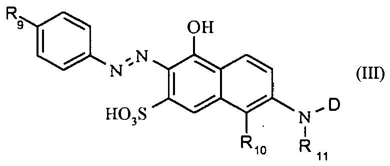 wherein
- R₉: signifies -SO₃H or -SO₂Y, wherein Y has the same definition as above,
- R₁₀: signifies H or -SO₃H,
- R₁₁: signifies H; unsubstituted C₁₋₄alkyl or substituted C₁₋₄alkyl,
- D: signifies 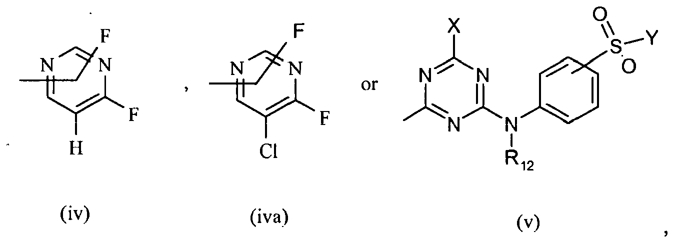
wherein
- X and Y: have the same meanings as defined above and
- R₁₂: signifies H; unsubstituted C₁₋₄alkyl or substituted C₁₋₄alkyl.
and/or at least one yellow (or orange)-dyeing compounds of formula formula (IV) 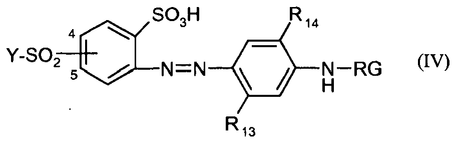 wherein
- R₁₃: signifies H; methyl; methoxy, ethoxy; -NHCONH₂ or -NHCOCH₃,
- R₁₄: signifies H; methyl; methoxy or ethoxy,
- RG: signifies 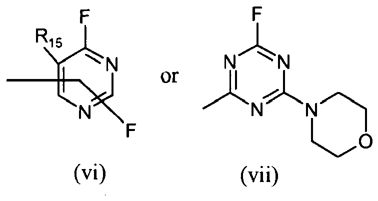
wherein
- R₁₅: signifies H or chlorine,
- Y: has the same definition as above and may be bonded in a meta- or in paraposition with respect to the azo group.
and the at least one blue-dyeing compound is selected from at least one blue-dyeing compound of formula (V) 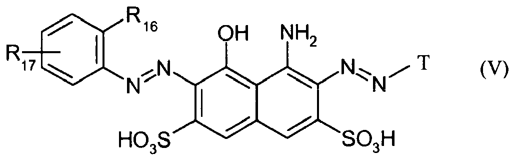 wherein
- R₁₆: signify H or -SO₃H and
- R₁₇: signifies 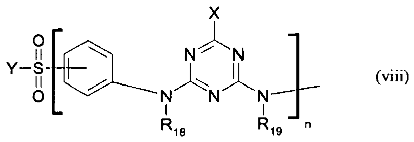
wherein
- X and Y: have the same meanings as defined above,
- R₁₈ and R₁₉: are independently from one another H; unsubstituted C₁₋₄alkyl or substituted C₁₋₄alkyl,
- n: is 0 or 1,
- T: signifies 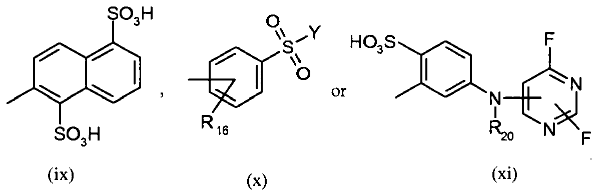
wherein
- R₁₆ and Y: have the meanings as defined above and
- R₂₀: is H; unsubstituted C₁₋₄alkyl or substituted C₁₋₄alkyl.
and/or at least one blue-dyeing compound of formula (VI) 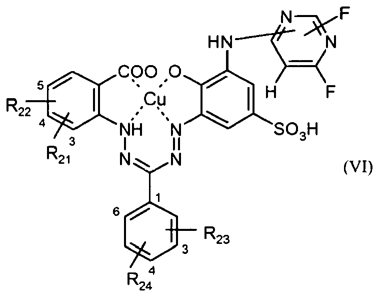 in which
- R₂₁: is H or -COOH,
- each of R₂₂ and R₂₄: is independently H; -COOH; -SO₃H; -NHCOCH₃; -NHCOCHY₂-CH₂Y₁; -NHCOCY₂=CH₂ or -NHCOCH₂Y₁,
- R₂₃: -COOH,
- Y₁: is chlorine; bromine; -OSO₃H or -SSO₃H and
- Y₂: is H; chlorine or bromine.
and/or at least one blue-dyeing compound of formula (VII) 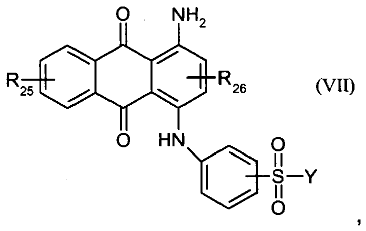 in which
- Y: has the same meanings as defined above,
- R₂₅: signifies H or -SO₃H,
- R₂₆: signifies H or -SO₃H.
and/or at least one blue-dyeing compound of formula (VIII) 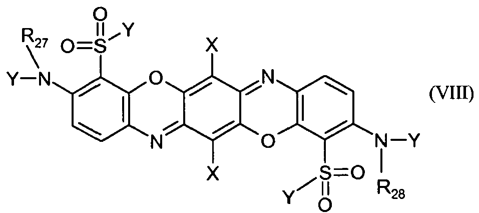 wherein
- each Y: has independently from each other the same meanings as defined above
- R₂₇ and R₂₈: are independently from each other H; unsubstituted C₁₋₄alkyl or substituted C₁₋₄alkyl.

Various auxiliaries, such as surface-active compounds, solubilising agents, thickeners, gel-forming substances, antioxidants, penetration agents, sequestering agents, buffers, light protection agents, care agents may additionally be present in the composition according to the invention.

Such auxiliaries are in particular wetting agents, antifoams, levelling agents, thickeners and plasticizers.

For the preparation of inks for printing processes suitable organic solvents or mixtures thereof are used. E.g. alcohols, ethers, esters, nitriles, carbonacidamides, cyclic amides, urea, sulfones and sulfone oxides.

Furthermore additional auxiliaries such as e.g. compounds, which adjust the viscosity and/ or the surface tension, may be added to the ink composition.

A preferred trichromatic dyeing process is characterized by using a dye mixture comprising at least one red-dyeing compound of the formula (Ia) 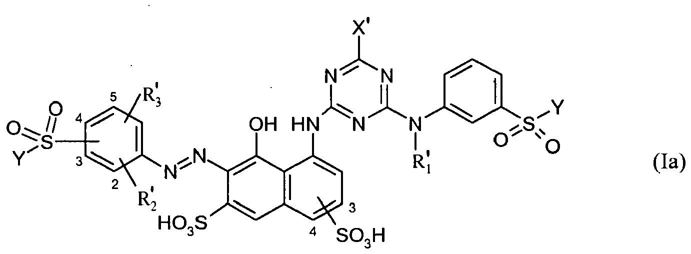 wherein
- X': is Cl or F,
- R'₁: is a C₁₋₂-alkyl, especially -C₂H₅, or a C₂₋₄-alkyl group, which is monosubstituted by Cl, F, Br, -OH, -CN or -NH₂,
- R'₂ and R'₃: are independently from each other H; C₁₋₂-alkyl; -SO₃H or -OC₁₋₂alkyl, especially H; -CH₃; -SO₃H or -OCH₃ and
the -SO₂Y group is attached to the phenylring at position 3, 4 or 5, wherein Y is as defined above and
at least one yellow (or orange)-dyeing compound of the formula (II), (III) and/or (IV) and at least one blue-dyeing compound as per the formula (V), (VI), (VII) and/or (VIII).

A more preferred trichromatic dyeing process is characterized by using a dye mixture comprising at least one yellow (or orange)-dyeing compound of formula (IIa), (IIb) and/or (IIc) 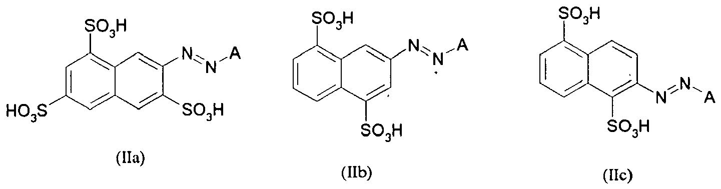 wherein A is 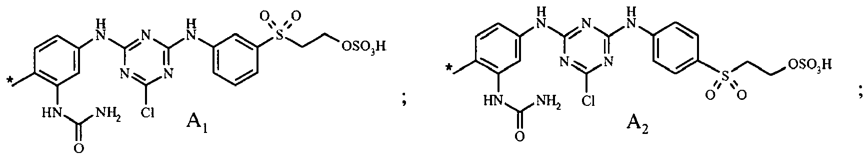 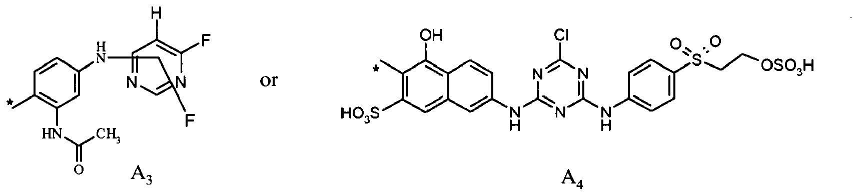 and/or at least one yellow (or orange)-dyeing compounds of formula (IIIa) or (IIIb) 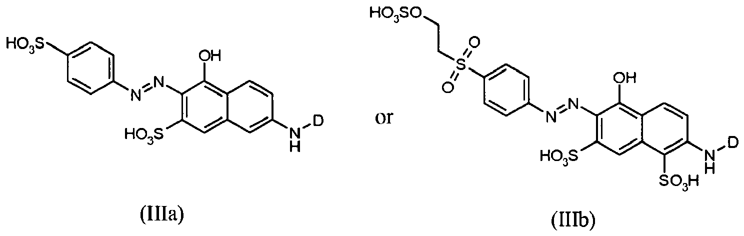 wherein D is 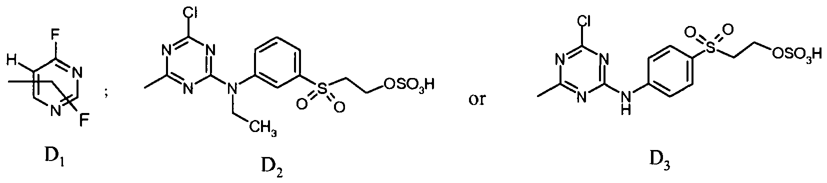 and/or at least one yellow (or orange)-dyeing compounds of formula (IVa) or (IVb) 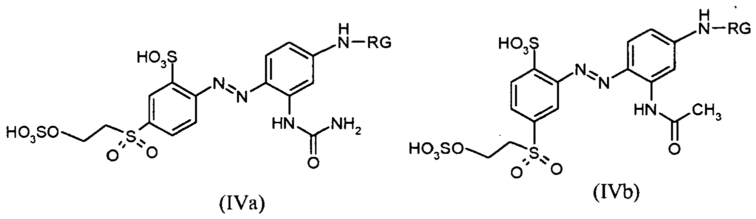 wherein RG is

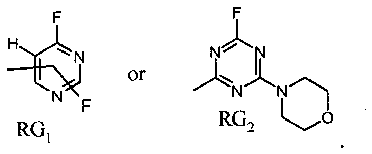

A more preferred trichromatic dyeing process is characterized by using a dye mixture comprising and/or at least one blue-dyeing compound of formula (Va), (Vb), (Vc), (Vd), (Ve) and/or (Vf) 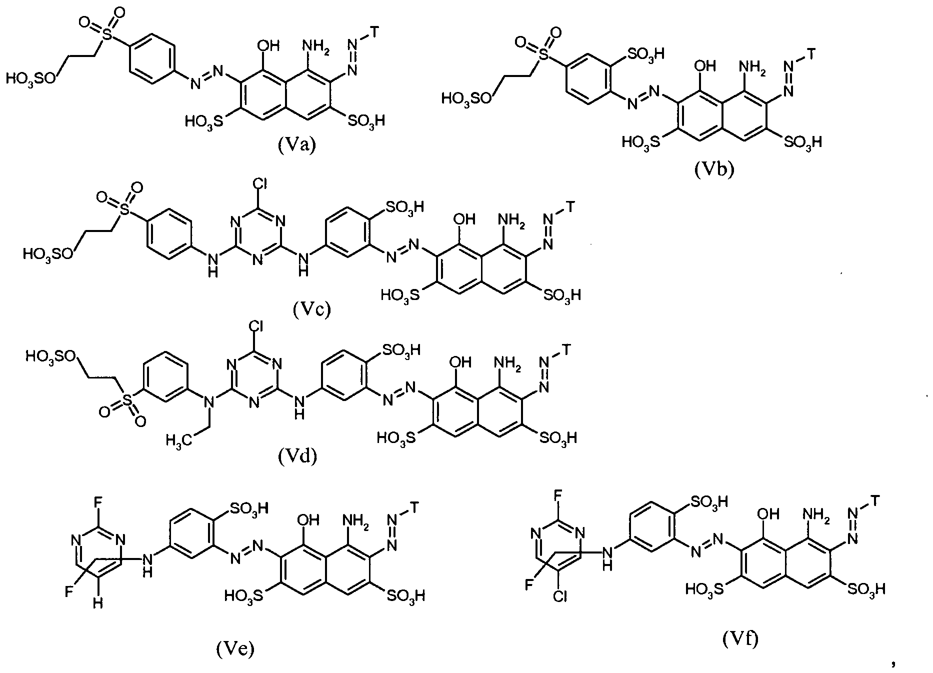 wherein T is 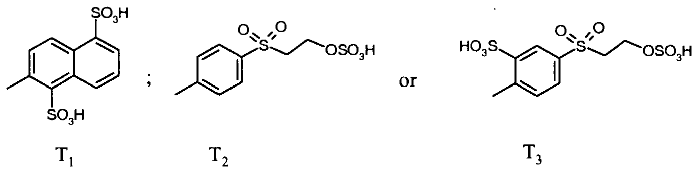 and/or at least one blue-dyeing compounds of formula (VIa) or (Vlb) 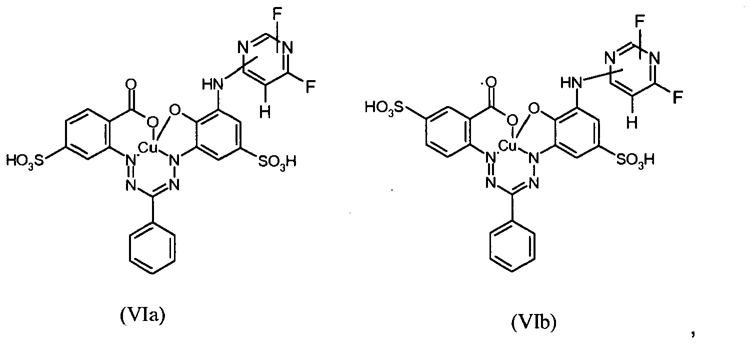 and/or at least one blue-dyeing compounds of formula (VIIa) or (VIIb) 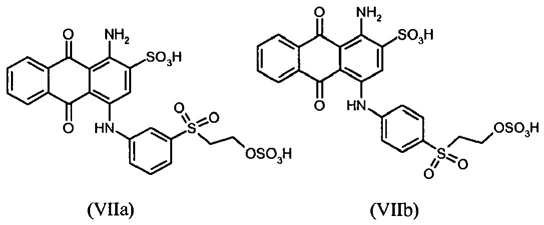 and/or at least one blue-dyeing compound of formula (VIIIa)

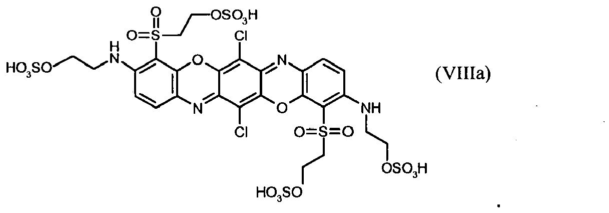

It is to be noted that all compounds may also be present in salt form. Useful salts include in particular alkali metal, alkaline earth metal or ammonium salts or the salts of an organic amine.

It is likewise to be noted that the alkyl groups can be linear or branched.

Preferred hydroxy-group-containing or nitrogen-containing organic substrates are leather and fibrous materials, which comprise natural or synthetic polyamides and, particularly, natural or regenerated cellulose such as, cotton, viscose and spun rayon. The most preferred substrates are textile materials comprising cotton.

Compounds of the formula (I) are prepared by reacting a diazotized compound of the formula (1) 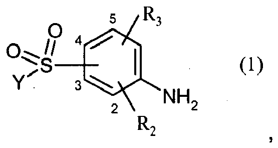 wherein all substituents have the meanings as defined above,
with a compound of the formula (2) 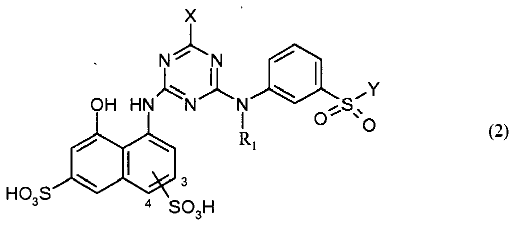 wherein all substituents have the meanings as defined above.

The process is preferably carried out in an aqueous medium at a temperature of from 0 to 40°C, more preferably 0 to 25°C and at a pH of between 1 to 7, more preferably 1 to 6.

A dyestuff of formula (I) may be isolated in accordance with known methods, for example by salting out, filtering and drying optionally in vacuum and at slightly elevated temperature.

The yellow (or orange)-dyeing compounds are known from the state of the art and can therefore be produced according to the process given in the prior art. E.g. WO9963005 and F.Lehr, Dyes Pigm. (1990), 14(4), 257.

The blue-dyeing compounds are also known from the state of the art and can therefore be produced according to the process given in the prior art. E.g. EP 99721, EP84314, W00168775, EP 149170, EP497174 and DE4241918.

This invention further provides dye mixtures for the trichromatic dyeing or printing of hydroxy-group-containing or nitrogen-containing organic substrates are used in the above processes according to the invention.

The inventive process for trichromatic dyeing or printing can be applied to all customary and known dyeing and printing processes, for example the continuous process, the exhaust process, the foam dyeing process and the ink-jet process.

The composition of the individual dye components in the trichromatic dye mixture used in the process according to the invention depends on the desired hue. For instance, a brown hue preferably utilizes 30-65% by weight of the yellow (or orange) component according to the invention, 10-30% by weight of the red component according to the invention and 10-30% by weight of the blue component according to the invention.

The red component, as described above, can consist of a single component or of a mixture of different red individual components.

The same applies to the yellow (or orange) and blue components.

The total amount of dyes in the process according to the invention is between 0.01 and 15% by weight, preferably between 1 and 10% by weight.

The present invention further provides hydroxy-group-containing or nitrogen-containing organic substrates dyed or printed by a dye mixture according to the invention.

The process according to the invention provides dyeings and prints having a homogeneous hue build-up throughout the entire hue spectrum with on-tone exhaustion, with a high bath exhaustion even in the case of fibres with low saturation and with a high dye build-up on fine fibres, particularly on microfibres.

The resulting dyeings or prints are notable for very high wet fastnesses, specifically the fastnesses in washing, perspiration and water. These good wet and fabrication fastnesses, which are in no way inferior to the fastness level of dyeings and prints with metal complexes, are obtained without aftertreatment. With an additional aftertreatment, these fastnesses are even exceeded.

These excellent results are provided by metal-free elements which meet the current and future ecological requirements of national institutes and regulations.

The tables which follow show some examples of the individual components of the dye mixtures which are used in the inventive trichromatic dyeing process.

**TABLE 1 / Examples 1-18**

| Examples of red-dyeing compounds of formula (Ib) according to formula (I) | | | | | | |
|---|---|---|---|---|---|---|
| 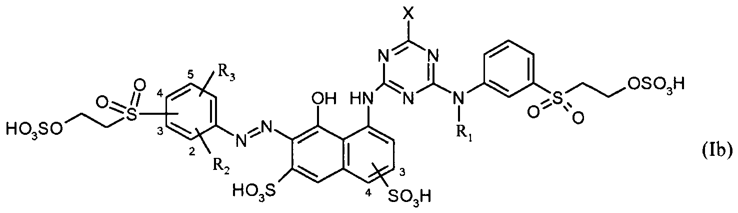 | | | | | | |

| **Ex.** | **Position of -O₂S-** | **Position of -SO₃H** | **R₁** | **R₂** | **R₃** | **X** |
|---|---|---|---|---|---|---|
| 1 | 3 | 4 | -CH₂CH₃ | H | H | Cl |
| 2 | 3 | 3 | -CH₂CH₃ | H | H | F |
| 3 | 4 | 3 | -CH₂CH₃ | H | H | F |
| 4 | 4 | 3 | -CH₂CH₃ | H | H | Cl |
| 5 | 4 | 4 | -CH₂CH₃ | H | H | Cl |
| 6 | 4 | 4 | -CH₂CH₃ | H | H | F |
| 7 | 4 | 3 | -CH₃ | H | H | F |
| 8 | 3 | 3 | -CH₃ | H | H | F |
| 9 | 5 | 3 | -CH₂CH₃ | (2)-OCH₃ | H | Cl |
| 10 | 4 | 3 | -CH₂CH₃ | (2)-OCH₃ | (5)-CH₃ | Cl |
| 11 | 4 | 3 | -CH₃ | (2)-OCH₃ | (5)-OCH₃ | F |
| 12 | 4 | 4 | -CH₂CH₃ | (2)-OCH₃ | (5)-OCH₃ | Cl |
| 13 | 4 | 4 | -CH₂CH₃ | (2)-SO₃H | H | Cl |
| 14 | 5 | 3 | -CH₃ | (2)-SO₃H | H | F |
| 15 | 5 | 3 | -CH₂CH₃ | (2)-SO₃H | H | Cl |
| 16 | 4 | 3 | -CH₂CH₃ | (2)-SO₃H | H | Cl |
| 17 | 4 | 3 | -CH₂CH₃ | (2)-SO₃H | H | F |
| 18 | 3 | 3 | -CH₂CH₃ | (4)-OCH₃ | H | Cl |

**TABLE 2 / Examples 19-35**

| Examples of red-dyeing compounds of formula (Ic) according to formula (I) | | | | | | |
|---|---|---|---|---|---|---|
| 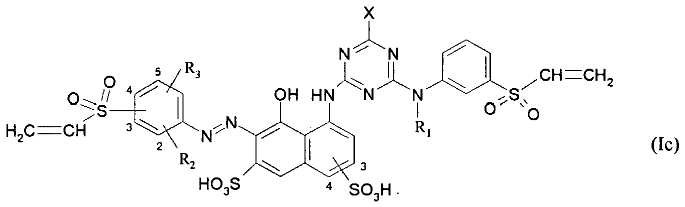 | | | | | | |

| **Ex.** | **Position of -O₂S-** | **Position of -SO₃H** | **R₁** | **R₂** | **R₃** | **X** |
|---|---|---|---|---|---|---|
| 19 | 3 | 4 | -CH₂CH₃ | H | H | Cl |
| 20 | 3 | 3 | -CH₂CH₃ | H | H | F |
| 21 | 4 | 3 | -CH₂CH₃ | H | H | F |
| 22 | 4 | 3 | -CH₂CH₃ | H | H | Cl |
| 23 | 4 | 4 | -CH₂CH₃ | H | H | Cl |
| 24 | 4 | 4 | -CH₂CH₃ | H | H | F |
| 25 | 4 | 3 | -CH₃ | H | H | F |
| 26 | 3 | 3 | -CH₃ | H | H | F |
| 27 | 5 | 3 | -CH₂CH₃ | (2)-OCH₃ | H | Cl |
| 28 | 4 | 3 | -CH₂CH₃ | (2)-OCH₃ | (5)-CH₃ | Cl |
| 29 | 4 | 3 | -CH₃ | (2)-OCH₃ | (5)-OCH₃ | F |
| 30 | 4 | 4 | -CH₂CH₃ | (2)-OCH₃ | (5)-OCH₃ | Cl |
| 31 | 4 | 4 | -CH₂CH₃ | (2)-SO₃H | H | Cl |
| 32 | 5 | 3 | -CH₃ | (2)-SO₃H | H | F |
| 33 | 5 | 3 | -CH₂CH₃ | (2)-SO₃H | H | Cl |
| 34 | 4 | 3 | -CH₂CH₃ | (2)-SO₃H | H | Cl |
| 35 | 4 | 3 | -CH₂CH₃ | (2)-SO₃H | H | F |

**TABLE 3 / Examples 36-52**

| Examples of mixtures of red-dyeing compounds of formula (Ib), (Ic), (Id) and (Ie) according to formula (I) | | | | | | |
|---|---|---|---|---|---|---|
| 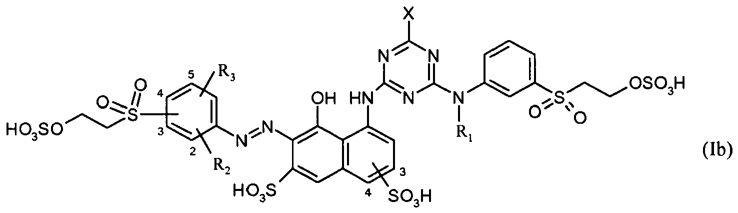 | | | | | | |
| 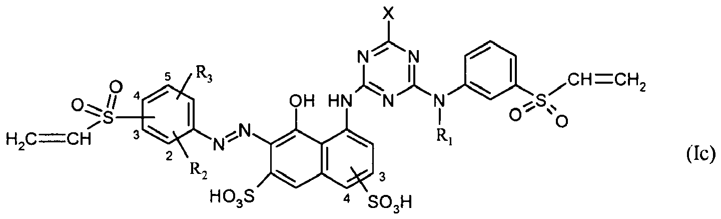 | | | | | | |
| 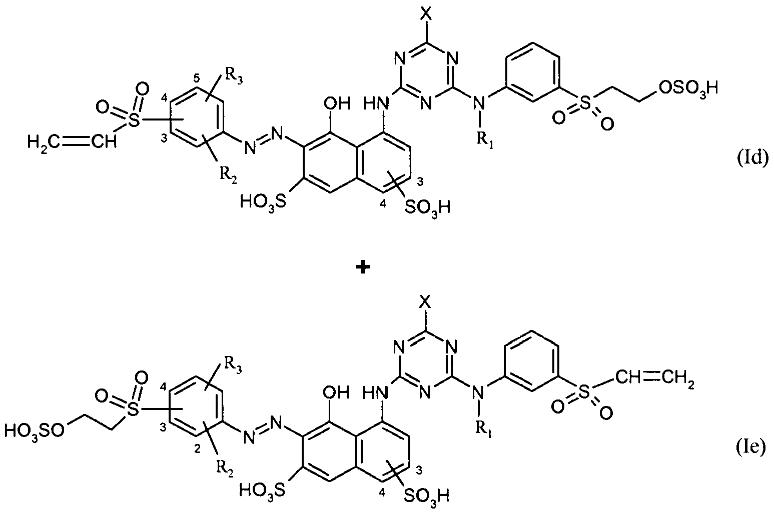 | | | | | | |

| **Ex.** | **Position or -O₂S-** | **Position of -SO₃H** | **R₁** | **R₂** | **R₃** | **X** |
|---|---|---|---|---|---|---|
| 36 | 3 | 4 | -CH₂CH₃ | H | H | Cl |
| 37 | 3 | 3 | -CH₂CH₃ | H | H | F |
| 38 | 4 | 3 | -CH₂CH₃ | H | H | F |
| 39 | 4 | 3 | -CH₂CH₃ | H | H | Cl |
| 40 | 4 | 4 | -CH₂CH₃ | H | H | Cl |
| 41 | 4 | 4 | -CH₂CH₃ | H | H | F |
| 42 | 4 | 3 | -CH₃ | H | H | F |
| 43 | 3 | 3 | -CH₃ | H | H | F |
| 44 | 5 | 3 | -CH₂CH₃ | (2)-OCH₃ | H | Cl |
| 45 | 4 | 3 | -CH₂CH₃ | (2)-OCH₃ | (5)-CH₃ | Cl |
| 46 | 4 | 3 | -CH₃ | (2)-OCH₃ | (5)-OCH₃ | F |
| 47 | 4 | 4 | -CH₂CH₃ | (2)-OCH₃ | (5)-OCH₃ | Cl |
| 48 | 4 | 4 | -CH₂CH₃ | (2)-SO₃H | H | Cl |
| 49 | 5 | 3 | -CH₃ | (2)-SO₃H | H | F |
| 50 | 5 | 3 | -CH₂CH₃ | (2)-SO₃H | H | Cl |
| 51 | 4 | 3 | -CH₂CH₃ | (2)-SO₃H | H | Cl |
| 52 | 4 | 3 | -CH₂CH₃ | (2)-SO₃H | H | F |

**TABLE 4 / Examples 53-56**

| Examples of yellow (or orange)-dyeing compounds of formula (II') according to formula (II) | | | | |
|---|---|---|---|---|
| 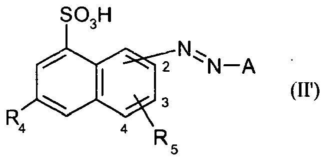 | | | | |

| **Ex.** | **R₄** | **R₅** | **A** | **Position -N=N-** |
|---|---|---|---|---|
| 53 | SO₃H | (3)-SO₃H | 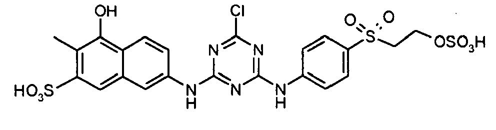 | 2 |
| 54 | SO₃H | (3)-SO₃H | 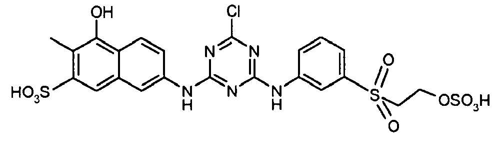 | 2 |
| 55 | H | (4)-SO₃H | 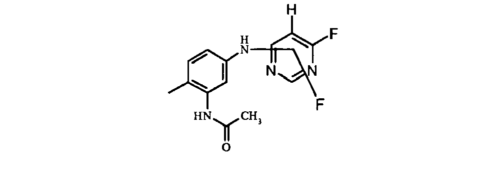 | 3 |
| 56 | SO₃H | (3)-SO₃H | 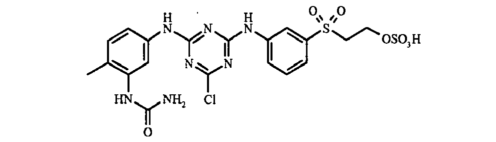 | 2 |

**TABLE 5 / Examples 57-59**

| Examples of orange-dyeing compounds of formula (III') according to formula (III) | | | |
|---|---|---|---|
| 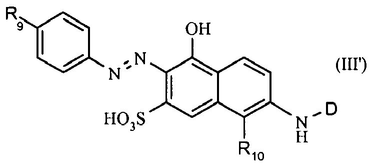 | | | |

| **Ex.** | **R₉** | **R₁₀** | **D** |
|---|---|---|---|
| 57 | -SO₃H | H | 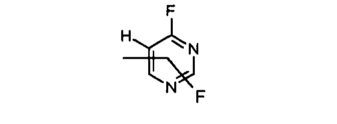 |
| 58 | SO₂CH₂CH₂OSO₃H | SO₃H | 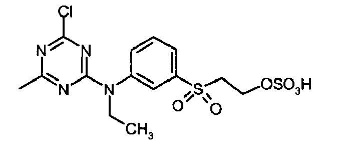 |
| 59 | SO₂CH₂CH₂OSO₃H | SO₃H | 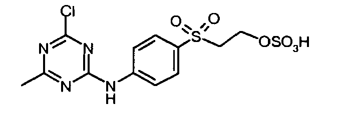 |

**TABLE 6 / Examples 60-62**

| Examples of yellow (or orange)-dyeing compounds of formula (IV') according to formula (IV) | | | |
|---|---|---|---|
| 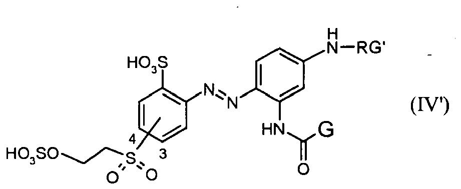 | | | |

| **Ex.** | **Position -SO₂CH₂CH₂OSO₃H** | **G** | **RG'** |
|---|---|---|---|
| 60 | 4 | -NH₂ | 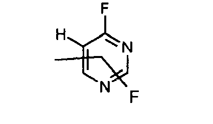 |
| 61 | 3 | -CH₃ | 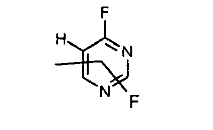 |
| 62 | 4 | -CH₃ | 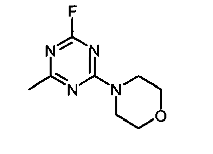 |

**TABLE 7 / Examples 63-72**

| Examples of blue-dyeing compounds of formula (V) | | | |
|---|---|---|---|
| 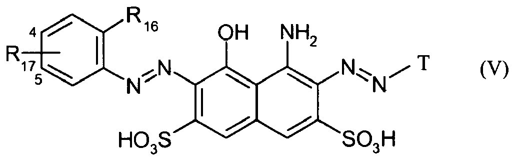 | | | |

| | | | |
|---|---|---|---|
| | | | |
| **Ex.** | **R₁₇** | **R₁₆** | **T** |
| 63 | (4)-SO₂CH₂CH₂OSO₃H | H | 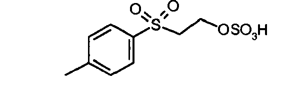 |
| 64 | (4)-SO₂CH₂CH₂OSO₃H | H | 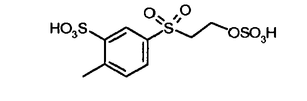 |
| 65 | (5)-SO₂CH₂CH₂OSO₃H | -SO₃H | 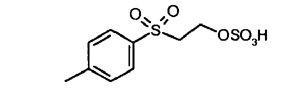 |
| 66 | 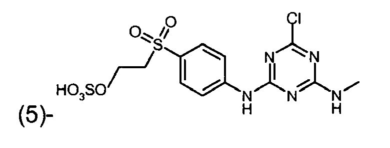 | -SO₃H | 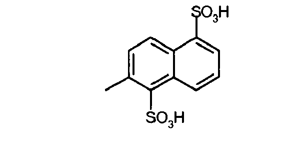 |
| 67 | 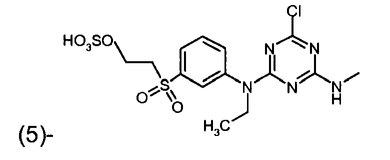 | -SO₃H | 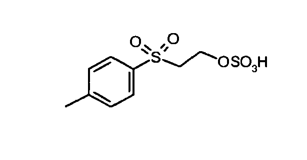 |
| 68 | 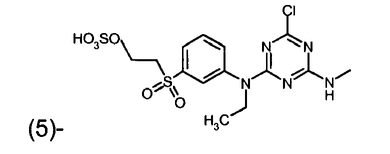 | -SO₃H | 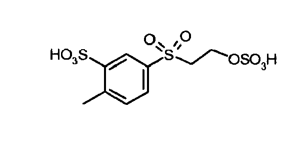 |
| 69 | 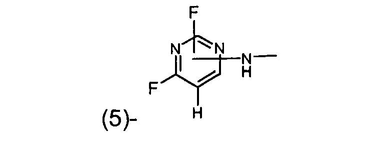 | -SO₃H | 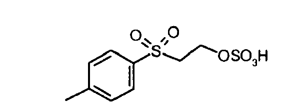 |
| 70 | 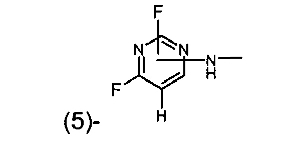 | -SO₃H | 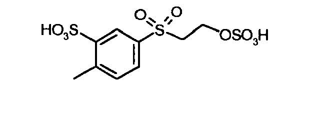 |
| 71 | 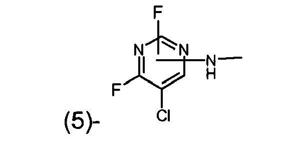 | -SO₃H | 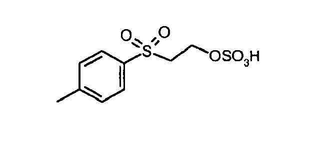 |
| 72 | 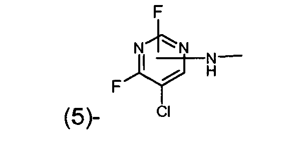 | -SO₃H | 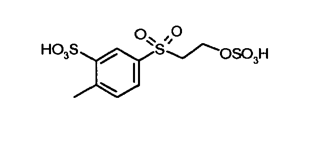 |

The application examples hereinbelow serve to illustrate the present invention. Parts are by weight and temperatures are in degrees Celsius, unless otherwise indicated.

### APPLICATION EXAMPLE 1

A 20 g sample of bleached cotton knitting. is transferred in a solution of 16 g sodium sulfate in 200 ml water at 60 °C,
0.5 % (calculated on the fabric weight) of a red dye as per Example 1
0.8 %of a yellow dye as per Example 55
0.5 %of a blue dye as per Formula VIa and
portions of 0.3, 0.7 and 1 g of sodium carbonate are added at 60°C after 30, 45 respectively 60 minutes. The temperature is maintained during another 60 minutes. The dyed fabric is rinsed in hot distilled water during 2 minutes and in hot tap water during 1 minute. After being kept in 1000 ml distilled water at the boil for 20 minutes. the fabric is dried. It provides a brown cotton dyeing having good fastnesses.

### EXAMPLES 2-6

These examples are made analogous to Use Example 1, but by using dyestuff mixtures as mentioned below. The resulted shade is given in brackets.

### APPLICATION EXAMPLE 2 (olive shade)

0.2 %of a red dye as per Example 1
0.4% of a yellow dye as per Example 55
0.6 %of a blue dye as per Formula VIa

### APPLICATION EXAMPLE 3 (brown shade)

0.3 %of a red dye as per Example 39
0.9 %of a orange dye as per Example 60
0.6 %of a blue dye as per Formula VIa

### APPLICATION EXAMPLE 4 (olive shade)

0.1 %of a red dye as per Example 39
0.5% of a yellow dye as per Example 60
0.6 %of a blue dye as per Formula VIa

### APPLICATION EXAMPLE 5 (brown shade)

0.5 %of a red dye as per Example 2
0.9 %of a yellow dye as per Example 55
0.3 %of a blue dye as per Example 69

### APPLICATION EXAMPLE 6 (olive shade)

0.2 %of a red dye as per Example 2
0.4% of a yellow dye as per Example 55
0.3 %of a blue dye as per Example 69.

## Claims

1. Trichromatic dyeing process for dyeing or printing hydroxy-group-containing or nitrogen-containing organic substrates **characterized by** using a dye mixture comprising at least one red-dyeing compound of the formula (I) 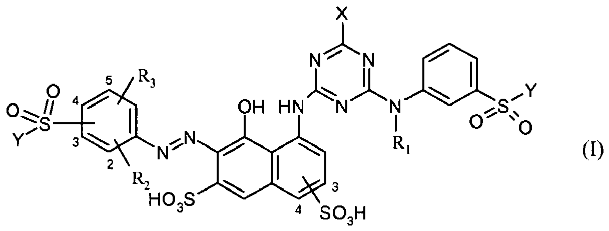 wherein
R₁ is a C₁₋₄-alkyl group or a substituted C₂₋₄-alkyl group,
R₂ and R₃ are independently from each other H; -OH; -CN; C₁₋₂-alkyl; -SO₃H; -COOH; -OC₁₋₂-alkyl or -NH₂,
X is a halogen radical and
Y signifies -CH=CH₂ or -CH₂CH₂-Z, wherein Z is a radical which can be eliminated by alkali,
and at least one yellow (or orange)-dyeing compound and at least one blue-dyeing compound,
wherein the at least one yellow (or orange)-dyeing compound is at least one yellow (or orange)-dyeing compound of the formula (II) 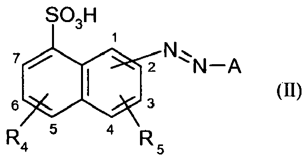 wherein
R₄ and R₅ signify independently from each other H or -SO₃H,
A signifies a group of formula (i) or (ia) 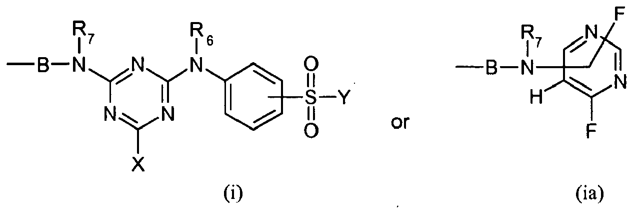
wherein
X and Y have the same meanings as defined in Claim 1,
R₆ and R₇ signify independently from each other H; unsubstituted C₁₋₄alkyl or substituted C₁₋₄alkyl,
B signifies 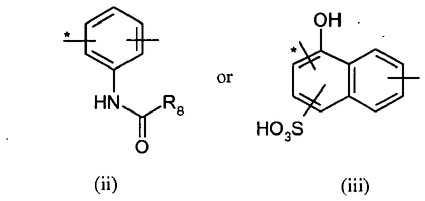
wherein R₈ signifies C₁₋₄alkyl; -NH₂ or -NHC₁₋₄alkyl,
and the asterisk marks the bond to the -N=N- group;
and/or at least one yellow (or orange)-dyeing compounds of formula (III) 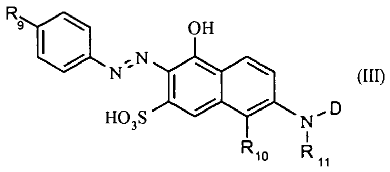 wherein
R₉ signifies -SO₃H or -SO₂Y, wherein Y has the same definition as defined in Claim 1,
R₁₀ signifies H or -SO₃H,
R₁₁ signifies H; unsubstituted C₁₋₄alkyl or substituted C₁₋₄alkyl,
D signifies 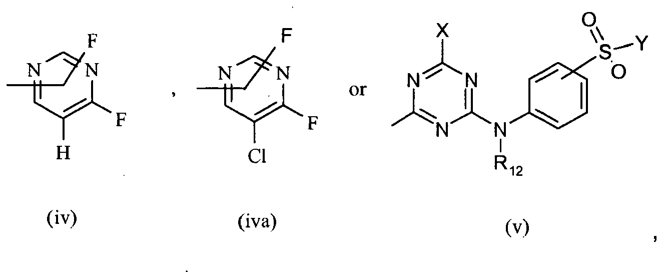
wherein
X and Y have the same meanings as defined in Claim 1 and
R₁₂ signifies H; unsubstituted C₁₋₄alkyl or substituted C₁₋₄alkyl;
and/or at least one yellow (or orange)-dyeing compounds of formula (IV) 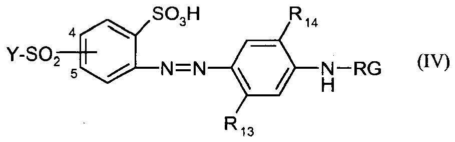 wherein
R₁₃ signifies H; methyl; methoxy, ethoxy; -NHCONH₂ or -NHCOCH₃,
R₁₄ signifies H; methyl; methoxy or ethoxy,
RG signifies 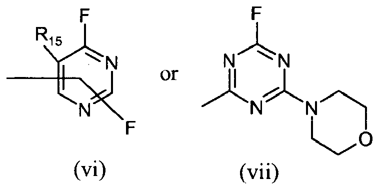
wherein
R₁₅ signifies H or chlorine,
Y has the same definition as defined in Claim 1 and may be bonded in a meta- or in para-position with respect to the azo group.
and the at least one blue-dyeing compound is selected from at least one blue-dyeing compound of formula (V) 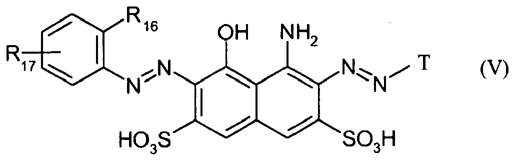 wherein
R₁₆ signify H or -SO₃H,
R₁₇ signifies 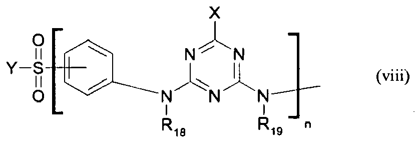
wherein
X and Y have the same meanings as defined in Claim 1,
R₁₈ and R₁₉ are independently from one another H; unsubstituted C₁₋₄alkyl or substituted C₁₋₄alkyl,
n is 0 or 1,
T signifies 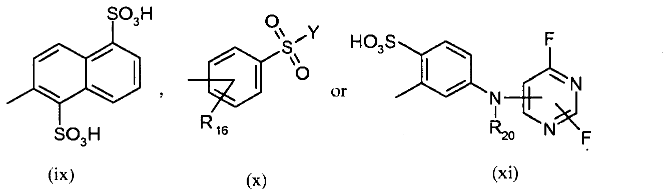
wherein
R₁₆ has the meanings as defined above and Y has the meanings as defined in Claim 1 and
R₂₀ is H; unsubstituted C₁₋₄alkyl or substituted C₁₋₄alkyl;
and/or at least one blue-dyeing compound of formula (VI) 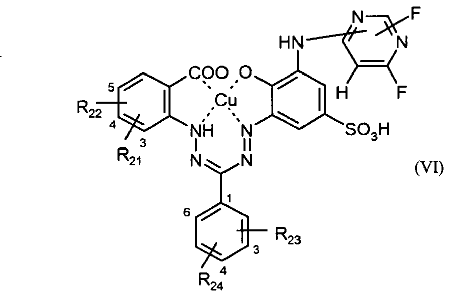 in which
R₂₁ is H or -COOH,
each of R₂₂ and R₂₄ is independently H; -COOH; -SO₃H; -NHCOCH₃; -NHCOCHY₂-CH₂Y₁; -NHCOCY₂=CH₂ or -NHCOCH₂Y₁,
R₂₃ -COOH,
Y₁ is chlorine; bromine; -OSO₃H or -SSO₃H and
Y₂ is H; chlorine or bromine;
and/or at least one blue-dyeing compound of formula (VII) 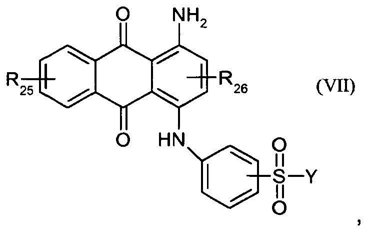 in which
Y has the same meanings as defined in Claim 1,
R₂₅ signifies H or -SO₃H,
R₂₆ signifies H or -SO₃H;
and/or at least one blue-dyeing compound of formula (VIII) 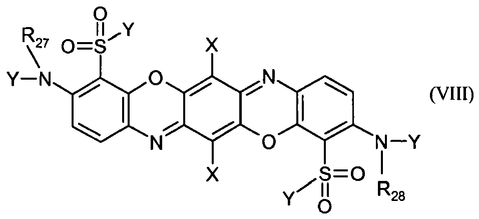 wherein
each Y has independently from each other the same meanings as defined in Claim 1
R₂₇ and R₂₈ are independently from each other H; unsubstituted C₁₋₄alkyl or substituted C₁₋₄alkyl.

2. Trichromatic dyeing process according to Claim 1 **characterized by** using a dye mixture comprising at least one red-dyeing compound of the formula (Ia) 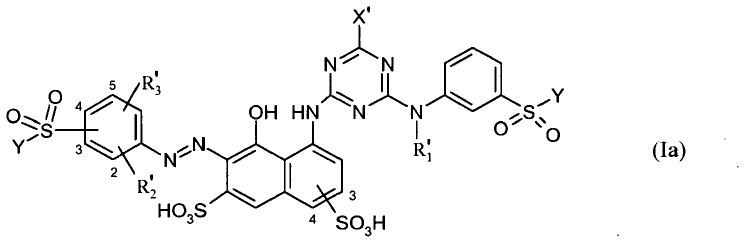 wherein
X' is Cl or F,
R'₁ is a C₁₋₂-alkyl, especially -C₂H₅, or a C₂₋₄-alkyl group, which is monosubstituted by Cl, F, Br, -OH, -CN or -NH₂,
R'₂ and R'₃ are independently from each other H; C₁₋₂-alkyl; -SO₃H or -OC₁₋₂alkyl, especially H; -CH₃; -SO₃H or -OCH₃ and
the -SO₂Y group is attached to the phenylring at position 3, 4 or 5, wherein Y is as defined in Claim 1.

3. Trichromatic dyeing process according to Claim 1, **characterized by** using a dye mixture comprising at least one yellow (or orange)-dyeing compound of formula (IIa), (IIb) and/or (IIc) 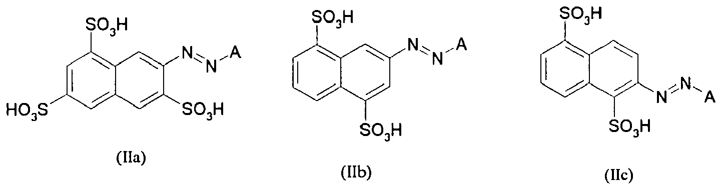 wherein A is 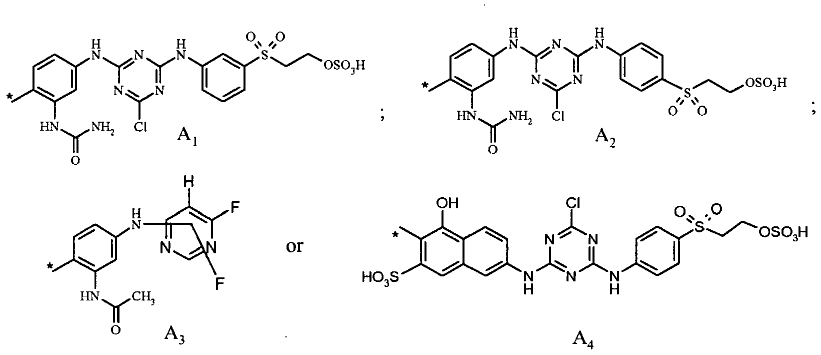 and/or at least one yellow (or orange)-dyeing compounds of formula (IIIa) or (IIIb) 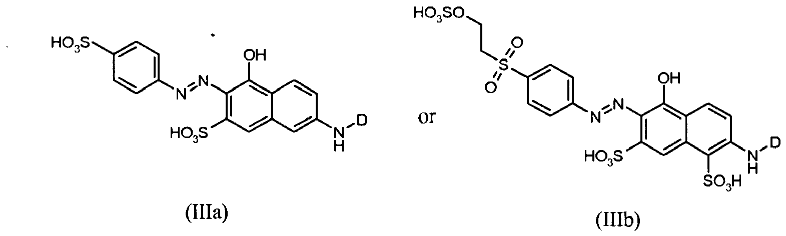 wherein D is 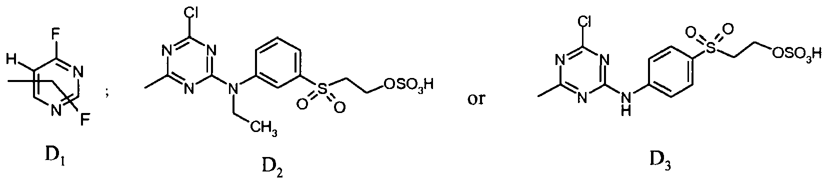 and/or at least one yellow (or orange)-dyeing compounds of formula (IVa) or (IVb) 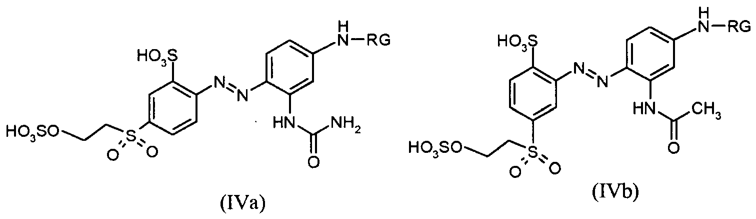 wherein RG is

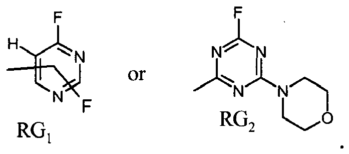

4. Trichromatic dyeing process according to Claim 1, **characterized by** using a dye mixture comprising at least one blue-dyeing compound of formula (Va), (Vb), (Vc), (Vd), (Ve) and/or (Vf) 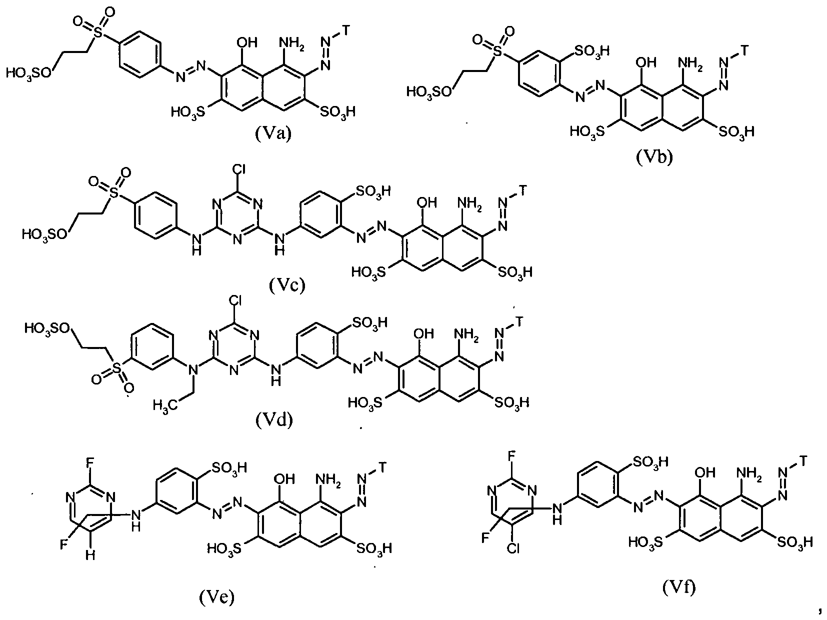 wherein T is 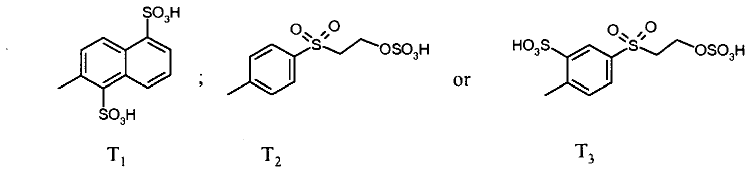 and/or at least one blue-dyeing compounds of formula (VIa) or (Vlb) 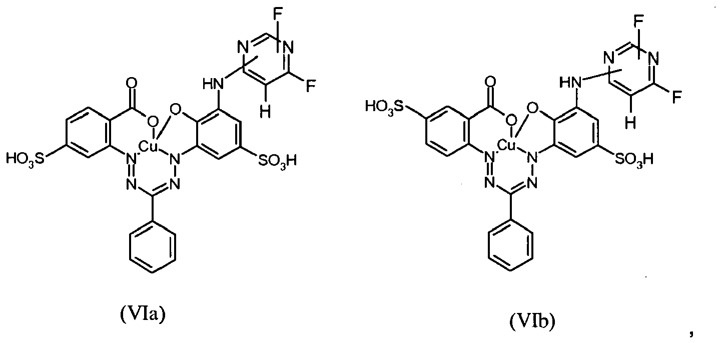 and/or at least one blue-dyeing compounds of formula (VIIa) or (VIIb) 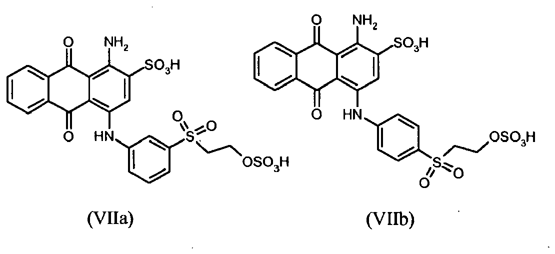 and/or at least one blue-dyeing compound of formula (VIIIa)

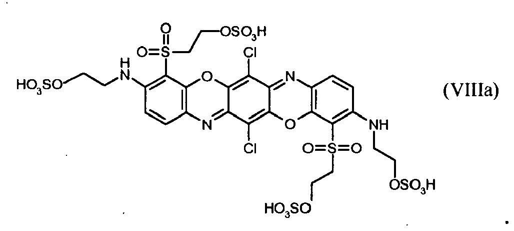

5. Dye mixtures used in the processes of Claims 1-4.

6. Substrates consisting of hydroxy-group-containing or nitrogen-containing organic substrates dyed or printed by a trichromatic dyeing process as claimed in any of Claims 1-4.

## Patentansprüche

1. Trichromiefärbeverfahren zum Färben oder Bedrucken von hydroxygruppenhaltigen oder stickstoffhaltigen organischen Substraten, **dadurch gekennzeichnet, dass** eine Farbstoffmischung, umfassend mindestens eine rotfärbende Verbindung der Formel (I) 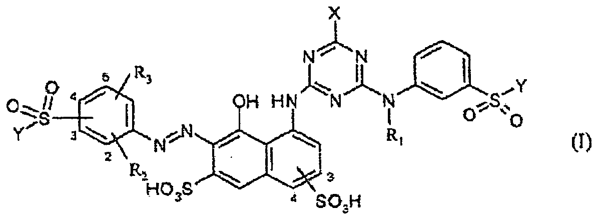 worin
R₁ für eine C₁₋₄-Alkylgruppe oder eine substituierte C₂₋₄Alkylgruppe steht,
R₂ und R₃ unabhängig voneinander für H; -OH; -CN; C₁₋₂-Alkyl; -SO₃H; -COOH; -O-C₁₋₂-Alkyl oder -NH₂ stehen,
X für einen Halogenrest steht und
Y -CH=CH₂ oder -CH₂CH₂-Z, worin Z für einen durch Alkali eliminierbaren Rest steht, bedeutet,
und mindestens eine gelbfärbende (oder orangefärbende) Verbindung
und mindestens eine blaufärbende Verbindung verwendet wird,
wobei es sich bei der gelbfärbenden (oder orangefärbenden) Verbindung um mindestens eine gelbfärbende (oder orangefärbende) Verbindung der Formel (II) 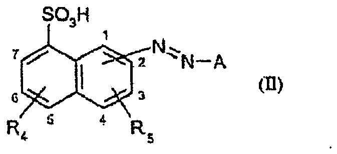 worin
R₄ und R₅ unabhängig voneinander H oder -SO₃H bedeuten,
A eine Gruppe der Formel (i) oder (ia) bedeutet: 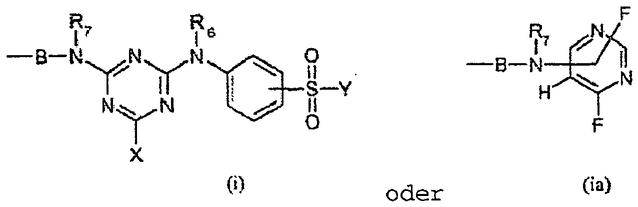
worin
X und Y die gleichen Bedeutungen wie in Anspruch 1 besitzen,
R₆ und R₇ unabhängig voneinander H; unsubstituiertes C₁₋₄-Alkyl oder substituiertes C₁₋₄-Alkyl bedeuten,
B 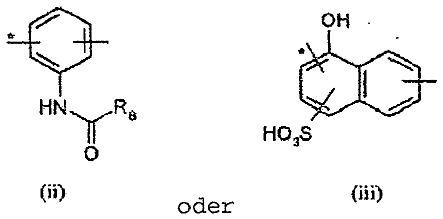
bedeutet, worin R₈ C₁₋₄-Alkyl; -NH₂ oder -NH-C₁₋₄-Alkyl bedeutet,
und das Sternchen die Bindung zur -N=N-Gruppe markiert;
und/oder mindestens eine gelbfärbende (oder orangefärbende) Verbindung der Formel (III) 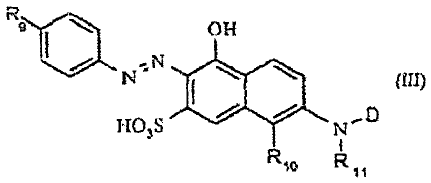 worin
R₉ -SO₃H oder -SO₂Y, worin Y die gleiche Definition wie in Anspruch 1 aufweist, bedeutet,
R₁₀ H oder -SO₃H bedeutet,
R₁₁ H; unsubstituiertes C₁₋₄Alkyl oder substituiertes C₁₋₄-Alkyl bedeutet,
D 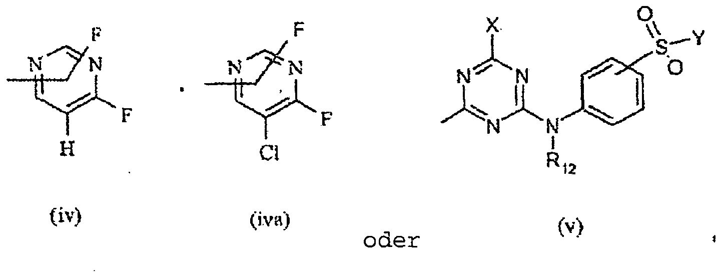
bedeutet, worin
X und Y die gleichen Bedeutungen wie in Anspruch 1 besitzen und
R₁₂ H; unsubstituiertes C₁₋₄-Alkyl oder substituiertes C₁₋₄-Alkyl bedeutet;
und/oder mindestens eine gelbfärbende (oder orangefärbende) Verbindung der Formel (IV) 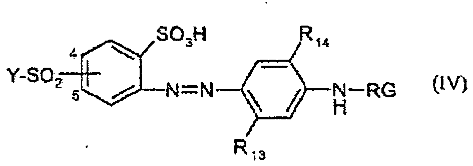 worin
R₁₃ H; Methyl; Methoxy, Ethoxy; -NHCONH₂ oder -NHCOCH₃ bedeutet,
R₁₄ H; Methyl; Methoxy oder Ethoxy bedeutet,
RG 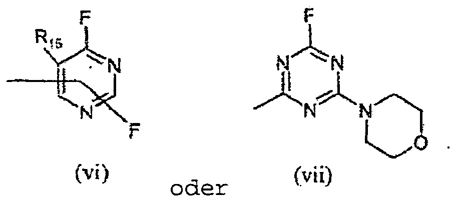
bedeutet, worin
R₁₅ H oder Chlor bedeutet,
Y die gleiche Definition wie in Anspruch 1 aufweist und in meta- oder para-Position zur Azogruppe gebunden sein kann,
handelt
und die mindestens eine blaufärbende Verbindung unter mindestens einer blaufärbenden Verbindung der Formel (V) 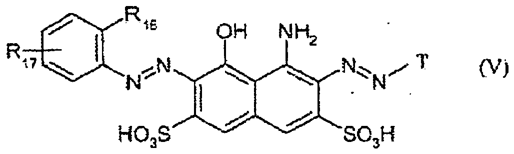 worin
R₁₆ H oder -SO₃H bedeutet,
R₁₇ 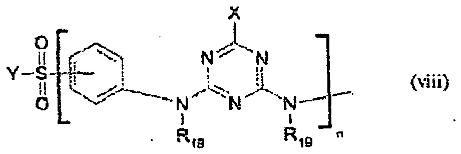 bedeutet, worin
X und Y die gleichen Bedeutungen wie in Anspruch 1 besitzen,
R₁₈ und R₁₉ unabhängig voneinander für H; unsubstituiertes C₁₋₄Alkyl oder substituiertes C₁₋₄-Alkyl stehen,
n für 0 oder 1 steht,
T 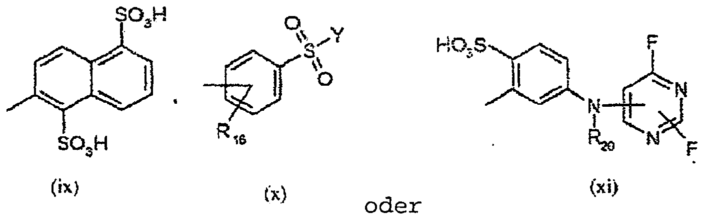
bedeutet, worin
R₁₆ die oben angegebenen Bedeutungen besitzt und Y die in Anspruch 1 angegebenen Bedeutungen besitzt und
R₂₀ für H; unsubstituiertes C₁₋₄-Alkyl oder substituiertes C₁₋₄-Alkyl steht;
und/oder mindestens einer blaufärbenden Verbindung der Formel (VI) 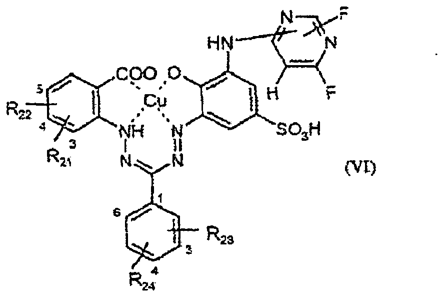 worin
R₂₁ für H oder -COOH steht,
R₂₂ und R₂₄ jeweils unabhängig für H; -COOH; -SO₃H; -NHCOCH₃; -NHCOCHY₂-CH₂Y₁; -NHCOCY₂=CH₂ oder -NHCOCH₂Y₁ stehen,
R₂₃ - COOH ;
Y₁ Chlor; Brom; -OSO₃H oder -SSO₃H bedeutet und
Y₂ H; Chlor oder Brom bedeutet;
und/oder mindestens einer blaufärbenden Verbindung der Formel (VII) 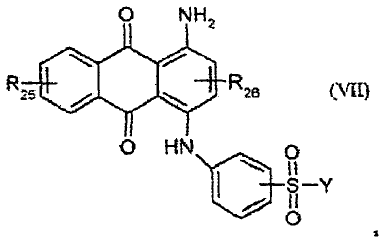 worin
Y die gleichen Bedeutungen wie in Anspruch 1 besitzt,
R₂₅ H oder -SO₃H bedeutet,
R₂₆ H oder -SO₃H bedeutet,
und/oder mindestens einer blaufärbenden Verbindung der Formel (VIII) 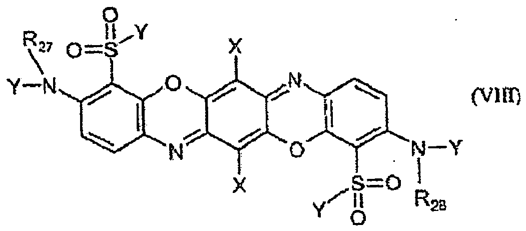 worin
Y jeweils unabhängig voneinander die gleichen Bedeutungen wie in Anspruch 1 besitzt und
R₂₇ und R₂₈ unabhängig voneinander für H; unsubstituiertes C₁₋₄-Alkyl oder substituiertes C₁₋₄-Alkyl stehen;
ausgewählt ist.

2. Trichromiefärbeverfahren nach Anspruch 1, **dadurch gekennzeichnet, dass** eine Farbstoffmischung, umfassend mindestens eine rotfärbende Verbindung der Formel (Ia) 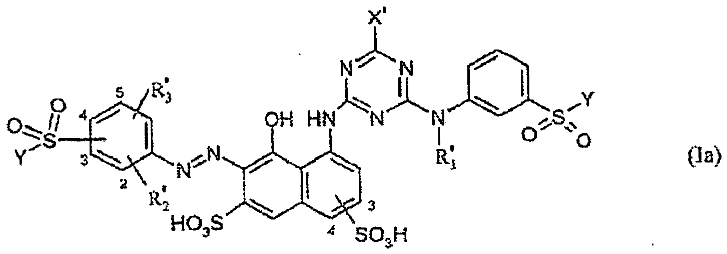 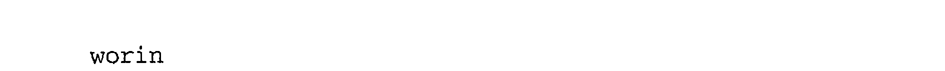
X' für Cl oder F steht,
R'₁ für eine C₁₋₂-Alkylgruppe, speziell -C₂H₅, oder eine C₂₋₄-Alkylgruppe, die einfach durch Cl, F, Br, -OH, -CN oder -NH₂ substituiert ist, steht,
R'₂ und R'₃ unabhängig voneinander für H; C₁₋₂-Alkyl; -SO₃H oder -O-C₁₋₂-Alkyl, speziell H; -CH₃; -SO₃H oder -OCH₃, stehen und
die -SO₂Y-Gruppe in Position 3, 4 oder 5 an den Phenylring gebunden ist, wobei Y wie in Anspruch 1 definiert ist,
verwendet wird.

3. Trichromiefärbeverfahren nach Anspruch 1, **dadurch gekennzeichnet, dass** eine Farbstoffmischung, umfassend mindestens eine gelbfärbende (oder orangefärbende) Verbindung der Formel (IIa), (IIb) und/oder (IIc) 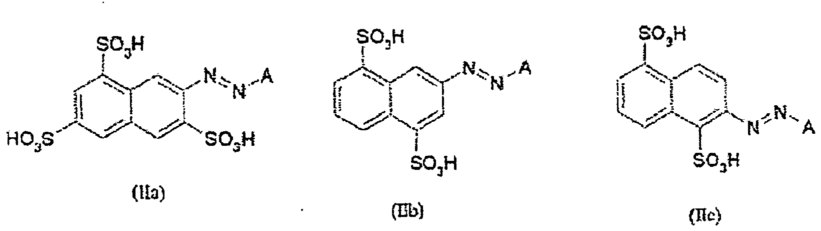 worin A für 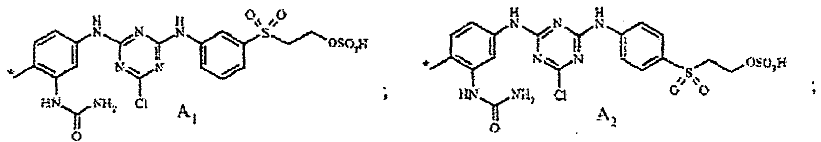 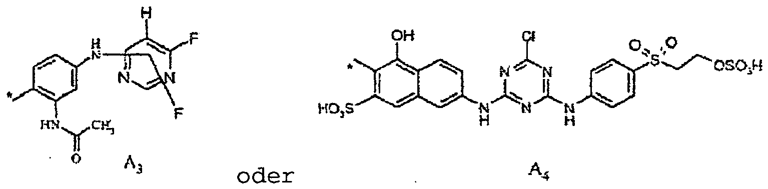 steht,
und/oder mindestens eine gelbfärbende (oder orangefärbende) Verbindung der Formel (IIIa) oder (IIIb) worin D für
steht,
und/oder mindestens eine gelbfärbende (oder orangefärbende) Verbindung der Formel (IVa) oder (IVb) worin RG für
steht, verwendet wird.

4. Trichromiefärbeverfahren nach Anspruch 1, **dadurch gekennzeichnet, dass** eine Farbstoffmischung, umfassend mindestens eine blaufärbende Verbindung der Formel (Va), (Vb), (Vc), (Vd), (Ve) und/oder (Vf) 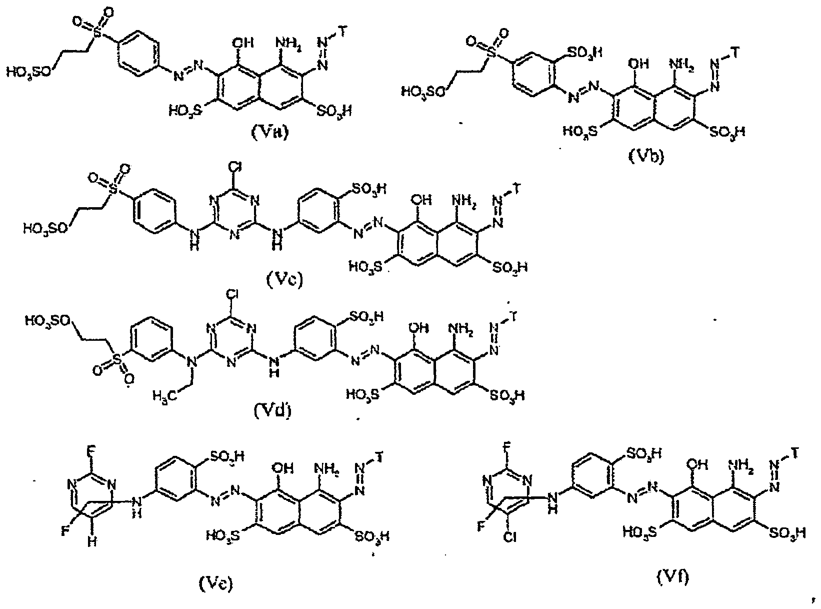 worin T für 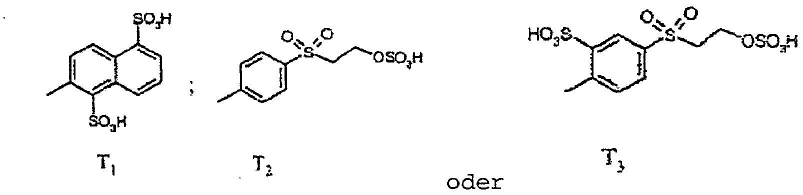 steht,
und/oder mindestens eine blaufärbende Verbindung der Formel (VIa) oder (VIb) 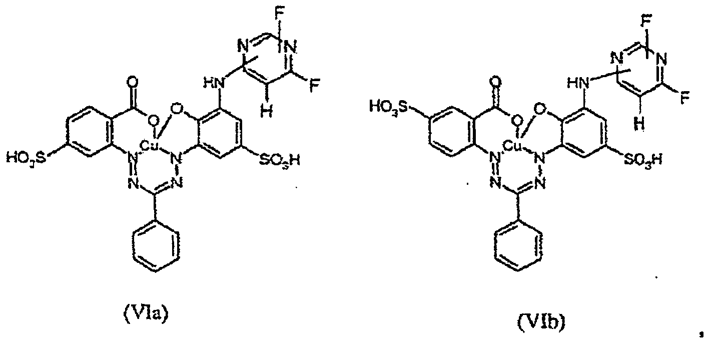 und/oder mindestens eine blaufärbende Verbindung der Formel (VIIa) oder (VIIb) 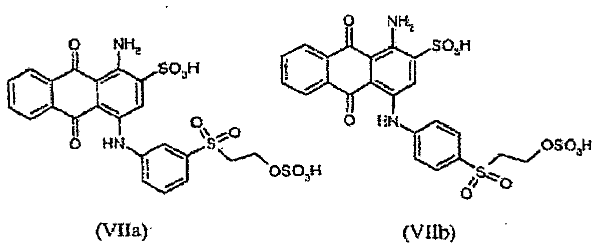 und/oder mindestens eine blaufärbende Verbindung der Formel (VIIIa) 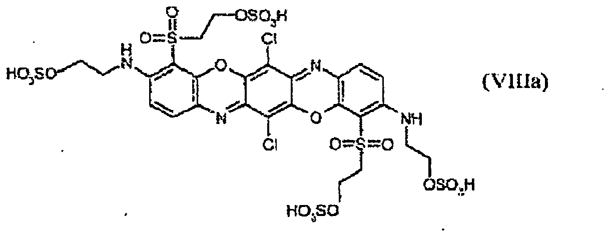 verwendet wird.

5. Farbstoffmischungen, welche in den Verfahren der Ansprüche 1-4 verwendet werden.

6. Substrate aus hydroxygruppenhaltigen oder stickstoffhaltigen organischen Substraten, die mittels einem Trichromiefärbeverfahren gemäß einem der Ansprüche 1-4 gefärbt oder bedruckt wurden.

## Revendications

1. Procédé de teinture trichromatique pour la teinture ou l'impression de substrats organiques hydroxylés ou azotés, **caractérisé par** l'utilisation d'un mélange de colorants comprenant au moins un composé colorant en rouge de formule (I) 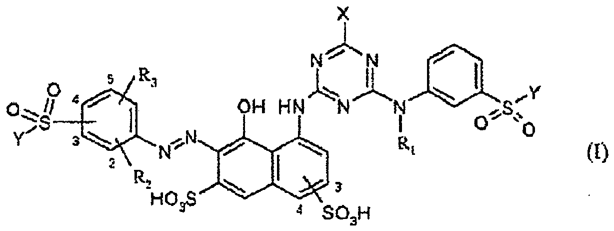 dans laquelle
R₁ est un groupement C₁₋₄-alkyle ou un groupement C₂₋₄-alkyle substitué,
R₂ et R₃ sont, indépendamment l'un de l'autre, H ; -OH ; -CN ; C₁₋₂-alkyle ; -SO₃H ; -COOH ; -OC₁₋₂-alkyle ou -NH₂,
X est un radical halogène et
Y signifie -CH=CH₂ ou -CH₂CH₂-Z, où Z est un radical pouvant être éliminé par un agent alcalin,
et au moins un composé colorant en jaune (ou orange) ;
et au moins un composé colorant en bleu,
où le au moins un composé colorant en jaune (ou orange) est au moins un composé colorant en jaune (ou orange) de formule (II) 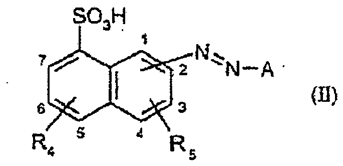 dans laquelle
R₄ et R₅ signifient, indépendamment l'un de l'autre, H ou -SO₃H,
A signifie un groupement de formule (i) ou (ia) 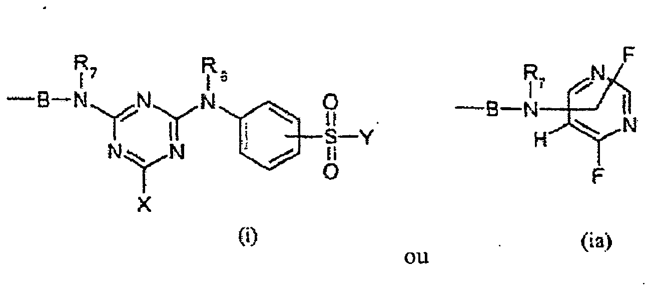 dans laquelle
X et Y ont les mêmes significations telles que définies selon la revendication 1,
R₆ et R₇ signifient, indépendamment l'un de l'autre, H ; C₁₋₄alkyle non substitué ou C₁₋₄alkyle substitué,
B signifie 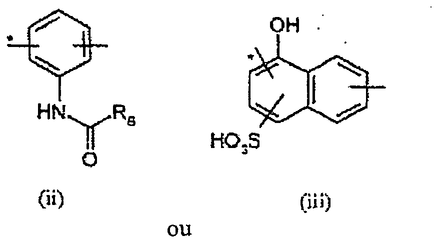 où R₈ signifie C₁₋₄alkyle ; -NH₂ ou -NHC₁₋₄alkyle,
et l'astérisque indique la liaison au groupement -N=N- ;
et/ou au moins un composé colorant en jaune (ou orange) de formule (III) 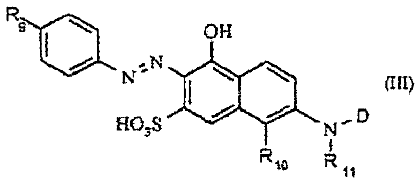 dans laquelle
R₉ signifie -SO₃H ou -SO₂Y, où Y a la même définition telle que définie selon la revendication 1,
R₁₀ signifie H ou -SO₃H,
R₁₁ signifie H ; C₁₋₄alkyle non substitué ou C₁₋₄alkyle substitué,
D signifie 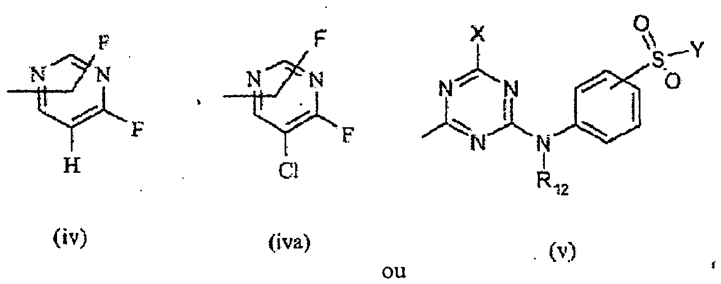 où
X et Y ont les mêmes significations telles que définies selon la revendication 1 et R₁₂ signifie H ; C₁₋₄alkyle non substitué ou C₁₋₄alkyle substitué ;
et/ou au moins un composé colorant en jaune (ou orange) de formule (IV) 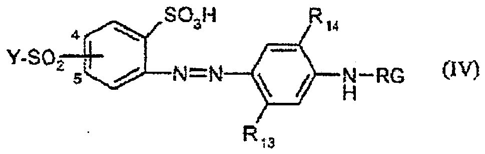 dans laquelle
R₁₃ signifie H ; méthyle ; méthoxy, éthoxy ; -NHCONH₂ ou -NHCOCH₃, R₁₄ signifie H ; méthyle ; méthoxy ou éthoxy,
RG signifie 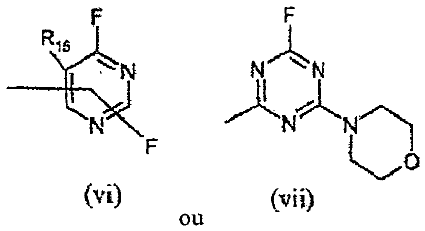 où
R₁₅ signifie H ou chlore,
Y a la même définition telle que définie selon la revendication 1 et peut être lié en position méta ou para par rapport au groupement azo ;
et le au moins un composé colorant en bleu est sélectionné parmi au moins un composé colorant en bleu de formule (V) 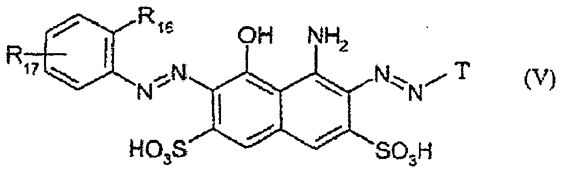 dans laquelle
R₁₆ signifie H ou -SO₃H,
R₁₇ signifie 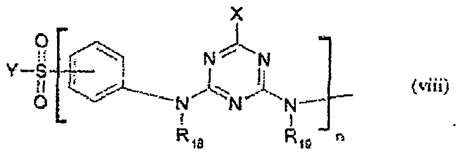 où
X et Y ont les mêmes significations telles que définies selon la revendication 1,
R₁₈ et R₁₉ sont, indépendamment l'un de l'autre, H ; C₁-alkyle non substitué ou C₁₋₄alkyle substitué,
n vaut 0 ou 1,
T signifie 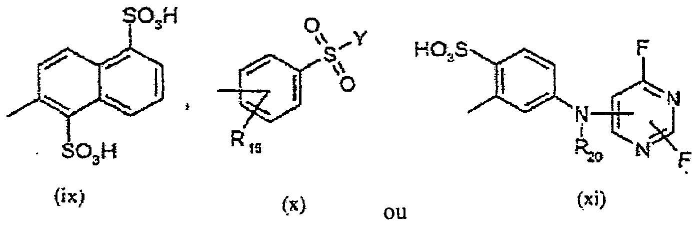 où
R₁₆ a les significations telles que définies ci-dessus et Y a les significations telles que définies selon la revendication 1 et
R₂₀ est H ; C₁₋₄alkyle non substitué ou C₁₋₄alkyle substitué ;
et/ou au moins un composé colorant en bleu de formule (VI) 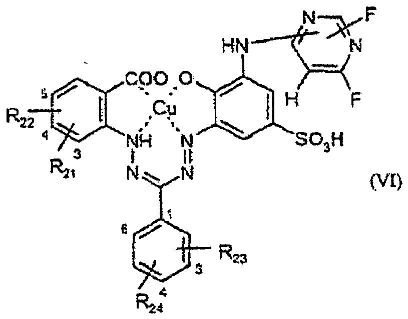 dans laquelle
R₂₁ est H ou -COOH,
chacun parmi R₂₂ et R₂₄ est, de manière indépendante, H ; -COOH ; -SO₃H ; -NHCOCH₃ ; -NHCOCHY₂-CH₂Y₁ ; -NHCOCY₂=CH₂ ou -NHCOCH₂Y₁,
R₂₃ est -COOH,
Y₁ est chlore ; brome ; -OSO₃H ou -SSO₃H et
Y₂ est H ; chlore ou brome ;
et/ou au moins un composé colorant en bleu de formule (VII) 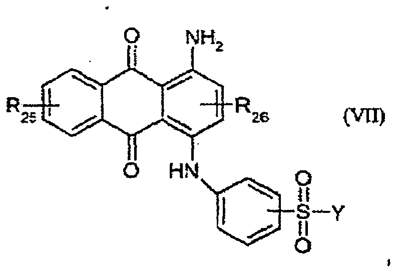 dans laquelle Y a les mêmes significations telles que définies selon la revendication 1,
R₂₅ signifie H ou -SO₃H,
R₂₆ signifie H ou -SO₃H ;
et/ou au moins un composé colorant en bleu de formule (VIII) 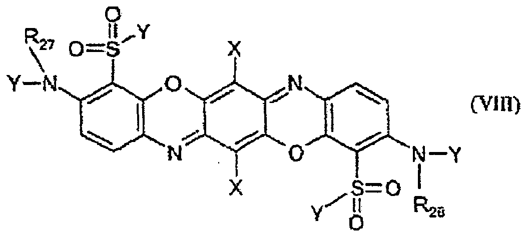 dans laquelle
chaque Y, indépendamment les uns des autres, a les mêmes significations telles que définies selon la revendication 1
R₂₇ et R₂₈ sont, indépendamment l'un de l'autre, H ; C₁₋₄alkyle non substitué ou C₁₋₄alkyle substitué.

2. Procédé de teinture trichromatique selon la revendication 1, **caractérisé par** l'utilisation d'un mélange de colorants comprenant au moins un composé colorant en rouge de formule (Ia) 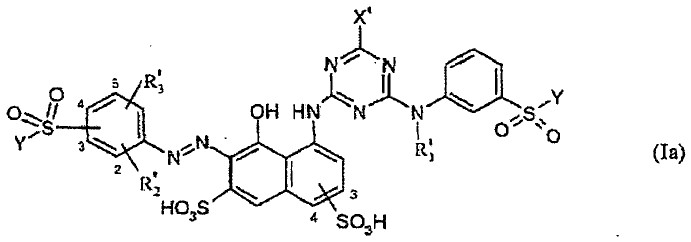 dans laquelle
X' est Cl ou F,
R'₁ est un groupement C₁₋₂-alkyle, notamment -C₂H₅, ou C₂₋₄-alkyle, qui est monosubstitué par Cl, F, Br, -OH, -CN ou -NH₂,
R'₂ et R'₃ sont, indépendamment l'un de l'autre, H ; C₁₋₂-alkyle; -SO₃H ou -OC₁₋₂-alkyle, notamment H ; -CH₃ ; -SO₃H ou -OCH₃ et
le groupement -SO₂Y est lié au cycle phényle au niveau de la position 3, 4 ou 5, où Y est tel que défini selon la revendication 1.

3. Procédé de teinture trichromatique selon la revendication 1, **caractérisé par** l'utilisation d'un mélange de colorants comprenant au moins un composé colorant en jaune (ou orange) de formules (IIa), (IIb) et/ou (IIc) 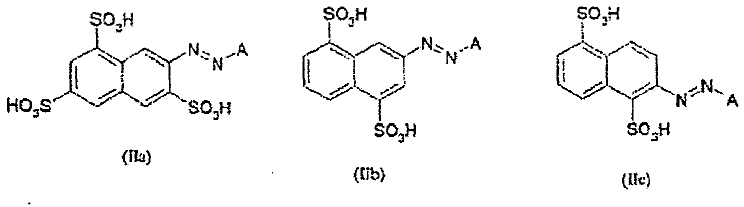 dans lesquelles A est 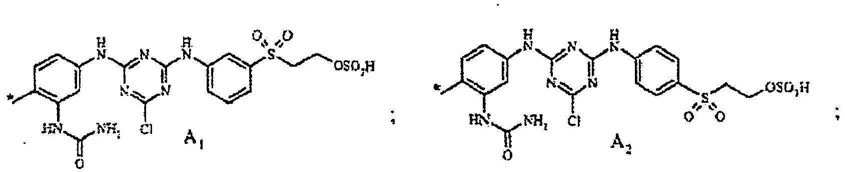 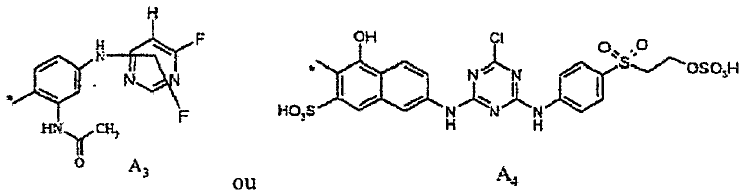 et/ou au moins un composé colorant en jaune (ou orange) de formule (IIIa) ou (IIIb) 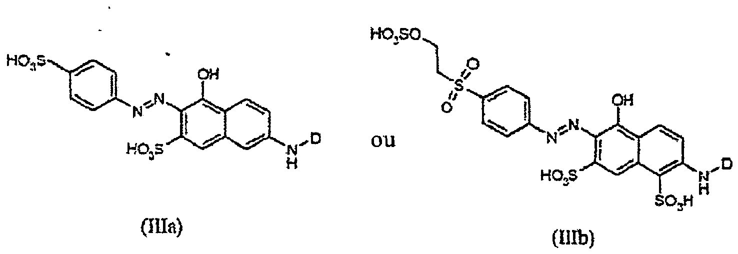 dans laquelle D est 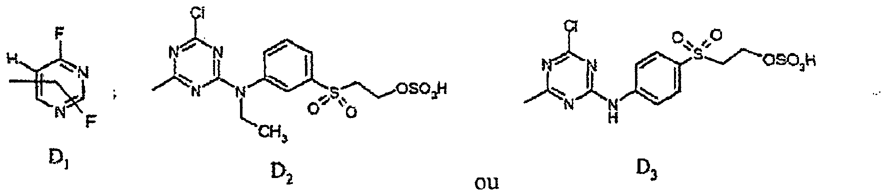 et/ou au moins un composé colorant en jaune (ou orange) de formule (IVa) ou (IVb) 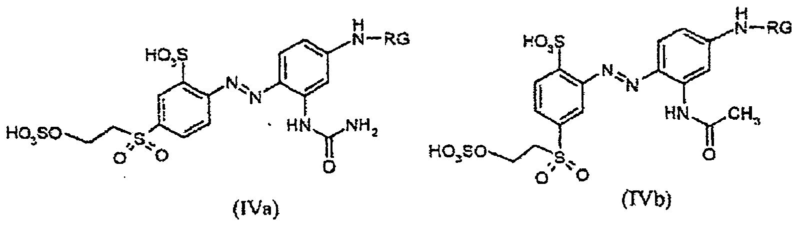 dans laquelle RG est

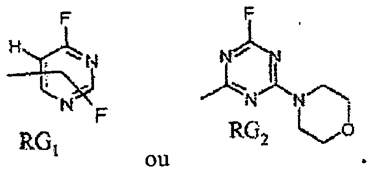

4. Procédé de teinture trichromatique selon la revendication 1, **caractérisé par** l'utilisation d'un mélange de colorants comprenant au moins un composé colorant en bleu de formules (Va), (Vb), (Vc), (Vd), (Ve) et/ou (Vf) 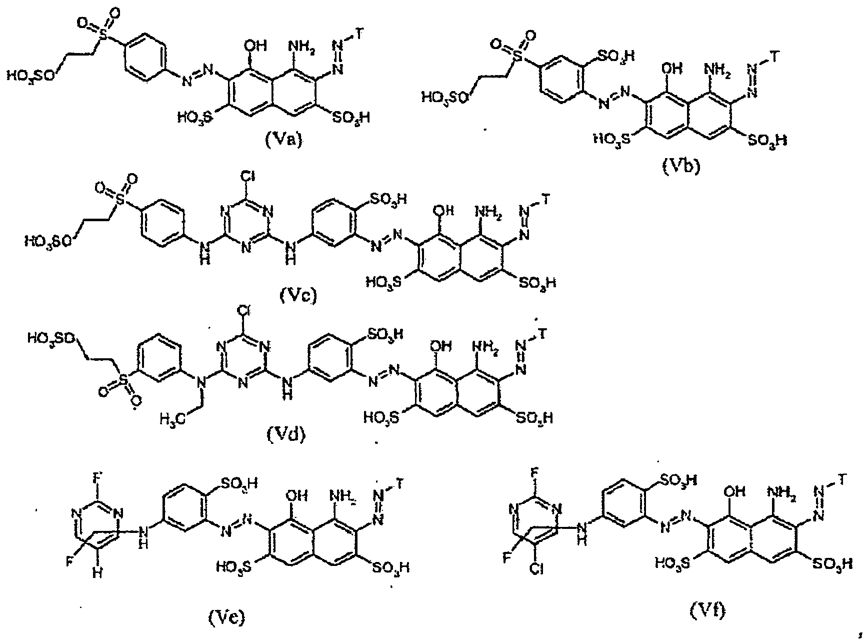 dans lesquelles T est 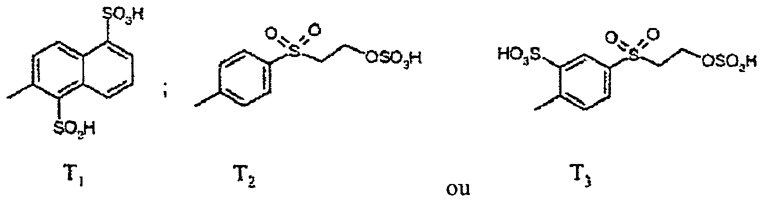 et/ou au moins un composé colorant en bleu de formule (VIa) ou (VIb) 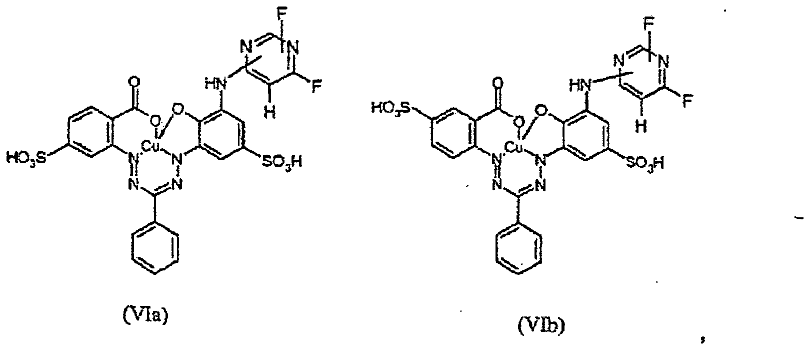 et/ou au moins un composé colorant en bleu de formule (VIIa) ou (VIIb) 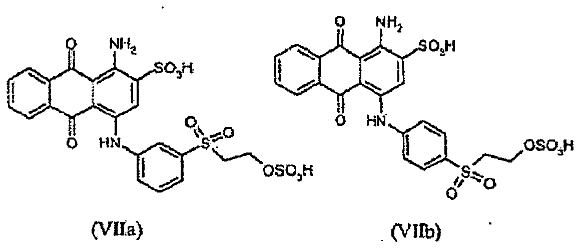 et/ou au moins un composé colorant en bleu de formule (VIIIa)

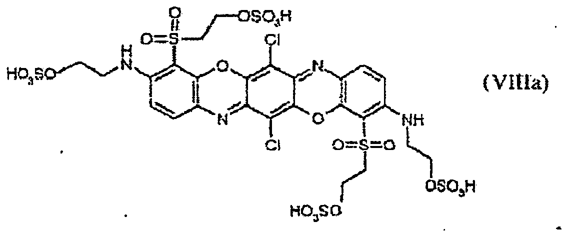

5. Mélange de colorants utilisé dans les procédés selon les revendications 1-4.

6. Substrats constitués par des substrats organiques hydroxylés ou azotés colorés ou imprimés par un procédé de teinture trichromatique selon l'une quelconque des revendications 1-4.
